# EUROPÄISCHE PATENTANMELDUNG

(11) **EP 0 742 506 A2**
(43) Veröffentlichungstag der Anmeldung: **13.11.1996**
(21) Anmeldenummer: 95117777.3
(22) Anmeldetag: 11.11.1995
(51) Int. Cl.: G05B 19/4099

(54) **Verfahren zur rechnerunterstützten Herstellung von Flächenkörpern**

(30) Priorität: 12.05.1995 DE 19517077
(71) Anmelder: Technische Universität Dresden, 01062 Dresden (DE)
(72) Erfinder: Uhlmann, Johannes, Prof. Dr., D-01239 Dresden (DE); Peter, Frank, Dipl.-Ing., D-06179 Eisdorf (DE)
(74) Vertreter: Heyner, Klaus, Dr.-Ing.

(57) **Zusammenfassung**

Beschrieben wird ein Verfahren zur rechnerunterstützten Herstellung von in ihrer Außen- und/oder Innenkontur aus Freiformflächen und/oder regelgeometrisch geformten Flächen bestehenden technischen Körpern ohne Verwendung eines physischen Modells als Digitalisierungsvorlage,

Die Anwendungsgebiete sind neben der Fahrzeugindustrie alle jene herstellenden Gewerbebereiche mit Produktepaletten, deren Produkteaußen- bzw. Innenkonturen sich im hohen Maße nur mit Freiformflächen und/oder regelgeometrisch geformten Flächen beschreiben lassen.

Die Erfindung zeichnet sich dadurch aus, daß auf der Basis von graphischen Entwürfen, Skizzen 1 , insbesondere auch Arbeitszeichnungen 2 u.ä. darin enthaltene Kurven, Geraden, Punkte bzw. Referenzpunkte, also Geometrieelemente, in den Rechner 5 überführt werden und somit ein rechnerinternes Geometriemodell erstellt wird. Kennzeichnend für den Verfahrensablauf ist dabei, daß die Flächen durch Punkte/Linien/Kurven (Geometrieelemente) repräsentiert werden und auf der Grundlage dieser Linien/ Kurven Flächen erzeugt werden können.
Diese Flächengenerierung kann einerseits im Rechner 5 erfolgen, wobei dann aus den Linien im Rechner rechnerinterne Flächen erzeugt werden. Andererseits können die Linien im Rechner sofort dazu verwendet werden, durch Ansteuerung eines werkzeugführenden Bewegungssystems Flächen am Modell bzw. Objekt 6 zu erzeugen. Generell dienen bei dem erfindungsgemäßen Verfahren Linien und/oder Flächen zur Steuerung der bei der Modellherstellung erforderlichen Werkzeuge.

## Beschreibung

Die Erfindung bezieht sich auf ein Verfahren zur rechnerunterstützten Herstellung von physischen (technischen) Körpern nach dem Oberbegriff des Anspruchs 1.

Die Anwendungsgebiete sind neben der Fahrzeugindustrie alle jene herstellenden Gewerbebereiche mit Produktepaletten, deren Produkteaußen- bzw. Innenkonturen sich im hohen Maße nur mit Freiformflächen und/oder regelgeometrisch geformten Flächen beschreiben lassen.

Gegenwärtig ist es im Werkzeug- und Formenbau noch überwiegende Praxis, für Freiformflächenobjekte die Digitalisierung anhand handwerklich erstellter physischer Modelle zur Geometriedatengewinnung für die anschließende Freiformflächengenerierung vorzunehmen.

Bekannt sind Vorrichtungen und Verfahren, die zur Generierung von Freiformflächen Anwendung finden, wie in der Schrift DE-A1 4000019 "Verfahren zur Herstellung von Führungsschablonen für gebogene Formteile". Aus CAD-Konstruktionzeichnungen werden Schablonen erzeugt.

In DE-A1 4124961 "Verfahren zur Herstellung von Körpern beliebiger Geometrie nach Zeichnungsvorlagen" werden beliebig geformte technische Gebilde mittels CAD rechnerintern als dünne aneinandergereihte Scheiben erzeugt. Ebenfalls erwähnenswert ist ein "Formeingabesystem in automatisch programmierender Funktion", das in DE-A1 3507614 beschrieben ist.

Aus US 4,755,927 ist eine Methode zur Schaffung und Bearbeitung einer gekrümmten Oberfläche eines dreidimensionalen gekrümmten Körpers bekannt, bei der eine Generierung der Krümmung erfolgt.
Dabei handelt es sich um eine spezielle Hardware- und Software-Organisation in Verbindung mit einer Methode zur Flächenerzeugung aus Ausgangskurvendaten, die aus heutiger Sicht durch spezifische CAD-Software-Entwicklungen zur Freiformflächengenerierung überholt sind.
Hauptinhalt dieser Erfindung ist eine spezielle Art der Flachenerzeugung unter Verwendung von Ausgangskurven, die durch Projektion, Segmentierung und Koordinatensystemtransformation aus diesen Kurven gekrümmte Oberflächen herstellt.

Aufgabe der Erfindung ist es, ein Verfahren zur Herstellung technischer Körper zu entwickeln, die vorwiegend aus Freiformflächen aber auch aus regelgeometrisch geformten Flächen bestehen können, bei dem die Flächenkonturen direkt von grafischen Entwürfen bzw. Zeichnungsvorlagen abgegriffen werden und nicht erst ein physisches, handgearbeitetes Modell zwecks Geometriedatengewinnung für eine rechnerinterne Flächengenerierung digitalisiert werden muß.

Diese Aufgabe wird erfindungsgemäß durch die Merkmale des Hauptanspruchs gelöst, die Unteransprüche zeigen weitere vorteilhafte Ausgestaltungen der Erfindung.

Die Wesensmerkmale der Erfindung bestehen nach Anspruch 1 und 2 darin, daß auf der Basis von graphischen Entwürfen, Skizzen, insbesondere auch Arbeitszeichnungen u.ä. darin enthaltene Kurven, Geraden, Punkte bzw. Referenzpunkte, also Geometrieelemente, in den Rechner überführt werden und somit ein rechnerinternes Geometriemodell erstellt wird, Kennzeichnend für den Verfahrensablauf ist dabei, daß die Flächen durch Punkte, Linien, Kurven repräsentiert werden und auf der Grundlage dieser Punkte, Linien, Kurven Flächen erzeugt werden können.
Diese Flächengenerierung kann einerseits im Rechner erfolgen, wobei dann aus den Linien im Rechner rechnerinterne Flächen erzeugt werden. Andererseits können die Linien im Rechner sofort dazu verwendet werden, durch Ansteuerung eines werkzeugführenden Bewegungssystems Flächen am Modell bzw. Objekt zu erzeugen. Generell dienen bei dem erfindungsgemäßen Verfahren Linien und/oder Flächen zur Steuerung der bei der Modellherstellung erforderlichen Werkzeuge.

Zur Gestaltung eines entsprechenden Arbeitsplatzes, an dem das Verfahren angewendet werden soll, ist es nach Anspruch 3 möglich und zweckmäßig, alle verwendeten technischen Hilfsmittel in einer kompakten Entwurfseinheit zu konzentrieren.

Das Verfahren kann für den Entwurf ästhetischer und nicht ästhetischer Körper in einer beliebigen Mischung von Freiformflächen und regelgeometrischen Flächen eingesetzt werden, wobei Körper mit überwiegendem Freiformflächencharakter dominieren.

Ob ästhetische oder nichtästhetische Objekte vorliegen, ist gewöhnlich eine Sache der Vereinbarung. Die ästhetische Entwurfsqualität kann i.d.R. nicht nur anhand von Bildern (Zeichnungen, Rechnerdarstellungen) ausgewertet werden, dies ist nur am physischen Modell möglich. Deshalb ist der Entwurfsablauf für ästhetische Objekte ein Schleifenprozeß. Rücksprünge und iterative Schleifenprozesse zwischen den einzelnen Arbeitsphasen sind nötig und müssen möglich sein. Ästhetische Objekte sind solche, die über ihre geometrische Richtigkeit hinaus auch noch Gefallenskriterien genügen müssen.
An nichtästhetischen Objekte werden diese Gefallenskriterien nicht gestellt, hierbei bestehen nur Ansprüche an die geometrische Richtigkeit.

Das Verfahren gliedert sich im wesentlichen in zwei Teilbereiche. Der erste Teilbereich beinhaltet die Schritte, die beschreiben wie man von den vorliegenden Zeichnungsdaten zu den rechnerinternen Daten gelangt. Der zweite Teilbereich beinhaltet den verschiedenen Umgang mit diesen Daten im Rechner. Grundprinzip ist dabei immer, daß die Flächen durch Linien repräsentiert werden.

Im ersten Teilbereich werden aus den angefertigten Entwürfen, Skizzen, technischen Arbeitszeichnungen u.a.m. (Hauptansichten und Schnitte) Geometriedaten gewonnen und in den Rechner überführt, s. Anspruch 4. Auf der Grundlage weniger solcher Daten werden im Rechner Linien erzeugt aus denen, wie oben beschrieben, auch noch Flächen generiert werden können.
Im Teilbereich 2 erfolgt die Verarbeitung dieser Daten bzw. Linien im Rechner. Diese Verarbeitung erfolgt applikationsbezogen nach mehreren Verfahrens- bzw. Arbeitsvarianten mit zugehörigen Schrittfolgen.

Eine erste Arbeitsvarinate A wird schwerpunktmäßig bei nichtästhetischen Körpern angewendet; Applikationsgebiete sind beispielsweise der Werkzeug- und Formenbau.
Vorrangig eignet sich die Variante A für solche Entwurfsprozesse, bei denen keine Mehrfachdurchläufe bzw. Schleifenprozesse verbunden mit Flächenänderungen notwendig sind.

Ästhetische Körper können mit dieser Arbeitsvarinate dann bearbeitet werden, wenn durch Einsatz einer ausreichend leistungsfähigen Hard- und Software auf effektive Weise partielle Flächenänderungen durchführbar sind.
Die Schrittfolge des nach dieser Arbeitsvarinate realisierten Verfahrens ist Gegenstand des Anspruchs 5.

Man erhält am Ende ein rechnerinternes Flächenmodell, das zur Werkzeugsteuerung mit dem Ziel der physischen Herstellung des entworfenen technischen Körpers dient.
Nach dieser Arbeitsvariante ist es möglich, aus den Linien im Rechner Einzelflächen zu erzeugen und daraus eine physische Einzelfläche herzustellen oder aber auch im Rechner erst mehrere Flächen (oder alle) zu erzeugen und erst dann daraus physische Flächen herzustellen.

Mögliche Einsatzgebiete für eine zweite Arbeitsvariante B sind sowohl der Werkzeug- und Formenbau als auch die Realisierung von Designerleistungen. Sie ist vorzugsweise dort anwendbar, wo kein rechnerinternes Flächenmodell benötigt wird.
Neben der Bearbeitung nichtästhetischer und regelgeometrischer Körper ist die Variante B vorteilhaft auch für Entwurfsprozesse zu ästhetischen Körpern mit umfangreichen oder auch partiellen Änderungen einsetzbar.

Kennzeichnendes Merkmal der Arbeitsvariante B ist nach Anspruch 6 und 7, daß auf der Grundlage der im Rechner vorhandenen Linien hierbei sofort physische Modelle und/oder Einzelflächen hergestellt werden. Die rechnerinternen Linien dienen zur Steuerung der Werkzeuge.

Nach Abschluß der Entwurfsarbeit und der Herstellung der physischen Entwurfskörper kann aus den ästhetischen und geometrisch bestätigten Linien ein Flächenmodell generiert werden, falls es wünschenswert ist. Dieser Arbeitschritt ist dann zeitmäßig aus den Entwurfsprozeß ausgekoppelt.

Bei der Verfahrensvariante C, siehe Anspruch 8, erfolgt im Rechner zuerst analog der Arbeitsvarante B nur eine Linienbeschreibung des Objektes. Die Linien dienen wieder zur Steuerung der Werkzeuge, um ein physisches Modell und/oder eine Einzelfläche zu erzeugen (Einzelflächen hierbei vorrangig).
Kennzeichnendes Merkmal dieser Verfahrensvariante ist, daß parallel dazu mit den am physischen Modell bzw. an der Einzelfläche bestätigten ästhetisch und geometrisch korrekten Kurven schrittweise der Flächenaufbau am Rechnermodell erfolgt. Dies kann automatisch oder manuell durch den Bediener geschehen. In der Reihenfolge, wie die physischen Einzelflächen am Modell erzeugt werden, verläuft auch der sequentielle Aufbau der Teilflächen des rechnerinternen Modells bezogen auf das Gesamtmodell.

Diese Variante ist dort einsetzbar, wo ein rechnerinternes Flächenmodell benötigt wird. Ästhetische Objekte können bearbeitet werden, da hierbei eine leichte Korrigierbarkeit der Linien/Flächen gegeben ist. Sie kann aber auch bei nichtästhetischen Objekten angewendet werden. Ein Applikationsbeispiel wäre auch hier eine Automobilkarosserie.

Grundlage für die Verfahrensvariante D nach Anspruch 9 und 10 ist wieder das rechnerinterne Linienmodell. Aus diesen Linien werden im Rechner Flächen erzeugt. Dieser Prozeß erfolgt aber nur dort, wo ästhetisch korrekte Linien für diese Flächen vorliegen bzw. wo keine wesentlichen ästhetischen Fehler erwartet werden. An den "unsicheren" Zonen werden zumindest vorerst keine rechnerinternen Flächen erzeugt. Dort werden die Linien zur Werkzeugsteuerung verwendet und physische Modelle und/oder Teilmodelle und/oder Einzelflächen erzeugt, um dann am Modell begutachtet werden zu können. Ausgehend von der Modellbegutachtung können dann Änderungen erfolgen (Linienänderungen). Sind die ehemals "unsicheren Zonen" in der Entwurfsarbeit gesichert, können daran dann rechnerinterne Flächenbeschreibungen durchgeführt werden.

Bei den bereits am Anfang der Entwurfsarbeit "sicheren" Zonen dienen die Flächen und/oder Linien zur Werkzeugsteuerung. Für die "unsicheren" Zonen sind für die Gestaltung, den Ablauf des Übergangs von den "unsicheren Zonen" zu den "sicheren" Zonen die Arbeitsvarianten B und C denkbar.

Diese Variante kann vorzugsweise bei ästhetischen Objekten eingesetzt werden, da auch hier eine leichte Korrigierbarkeit gegeben ist. Auch bei dieser Verfahrensvariante kann am Ende ein vollständiges recherinternes Flächenmodell vorliegen. Es ist speziell auf solchen Applikationsgebieten einsetzbar, wo an Ojekten "sichere" bzw. "unsichere" gestalterische Zonen vorliegen, beispielsweise bei der Entwicklung einer Fahrzeugkarosserie.

Weitere Einzelheiten, Merkmale und Vorteile der Erfindung ergeben sich aus der nachfolgenden Beschreibung von Ausführungsbeispielen unter Bezugnahme auf die zugehörige Zeichnung. Es zeigen
- Fig. 1: Liniendarstellung eines Gehäusedeckels,
- Fig. 2: Flächennetzdarstellung eines Gehäusedeckels,
- Fig. 3: Liniendarstellung einer Fahrzeug-Karosserie,
- Fig. 4: Flächennetzdarstellung einer Fahrzeug-Karosserie und
- Fig. 5: schematische Darstellung des Gesamtprozesses.

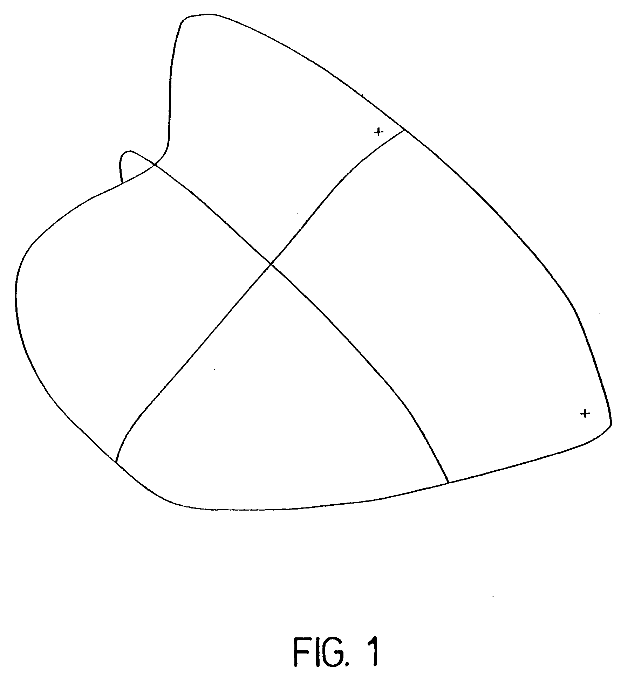

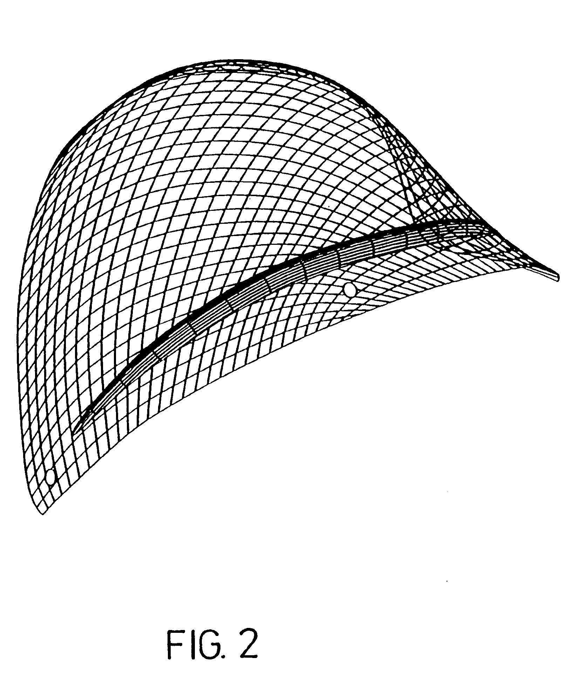

Die Fig. 1 und 2 zeigen als Beispiel für einen nichtästhetischen Entwurfskörper einen Gehäusedeckel. Auf der Grundlage der im Rechner vorhandenen Linien werden im Rechner Flächen erzeugt. Diese Flächen dienen anschließend zur Steuerung der Werkzeuge, um ein physisches Modell und/oder eine Einzelfläche herzustellen.

Der detaillierte Ablauf der Verfahrensschritte nach der Arbeitsvariante A kann wie folgt beschrieben werden:
- Gewinnen von Rohkoordinatenwerten mit geeigneten Meßmitteln, z.B. einem Zeichenlineal, aus Arbeitszeichnungen, wofür nur wenige Ansichten/Schnitte und willkürlich festgelegte Punkte auf den Kurvenzügen ausreichend sind;
- Eingabe der Rohkoordinatenwerte in den Rechner, z.B. alphanumerisch;
- Auswahl geeignet erscheinender Stützstellen aus den eingegebenen Rohkoordinatenwerten und Linienerzeugung, beispielsweise Bezierkurven, B-Splines, gegebenenfalls Wiederholung dieser Prozedur, wenn die Linie nicht dem gewünschten Linien-/Kurvenzug entspricht;
- Kurven-/Liniendiagnose, z.B. auf Krümmungsstetigkeit
- Erzeugen von Einzelflächen z.B. durch Kurven-/Linientranslation oder Aufspannen von Flächen zwischen Kurven;
- Schrittweiser Körperaufbau aus Einzelflächen bzw. Flächengruppen; falls es dabei zu Flächendurchdringungen kommt, können die überstehenden Flächenteile weggetrimmt werden;
- Erzeugung der Fräserbahnsteuerdatensätze für die generierten Flächen.

Raumkurven, die für eine Detaillierung des Gesamtkörpers erforderlich sind, können durch Projektion ebener Kurven in Hauptschnitten auf die doppelt gekrümmten Flächen generiert werden.
Entspricht eine Durchdringungskante von zur Durchdringung gebrachten Flächen nicht der gewünschten, kann diese als Raumkurve frei manipuliert und für den Flächenneuaufbau genutzt werden.

Dieser Ablauf ist die Grundlage für eine teilweise Automatisierung des Flächenaufbaus beliebiger flächengeformter Körper.
Ein automatisierter Flächenaufbau muß an bestimmten Stellen unterbrochen werden, wenn Zwischenresultate der Kontrolle/Korrektur bedürfen.
Grundlage der Werkzeug-Steuerung ist das zuvor erstellte CAD-Flächenmodell. Als Werkzeug kann beispielsweise eine CNC-Fräsmaschine oder eine Stereo-Lithographieanlage eingesetzt werden. Am erstellten Modell evtl. vorhandene ästhetisch-gestalterische Fehler können durch Wiederholung der Verfahrensabfolge überarbeitet und beseitigt werden. Für (Freiform-)Flächenobjekte, an die keine ästhetischen Ansprüche gestellt werden, gilt diese Aussage nicht. Es gelingt hier i.d.R. im ersten CAD/CAM-Durchlauf, eine gültige Flächenbeschreibung zu erreichen.

Die Korrektur- und Komplettierungsdaten des manuell vervollständigten physischen Arbeitsmodells werden zur Veränderung des rechnerinternen CAD-Modelles genutzt, bevor in weiteren CNC-Maschinenabläufen ein ästhetisch richtiger Entwurfskörper erhalten wird.

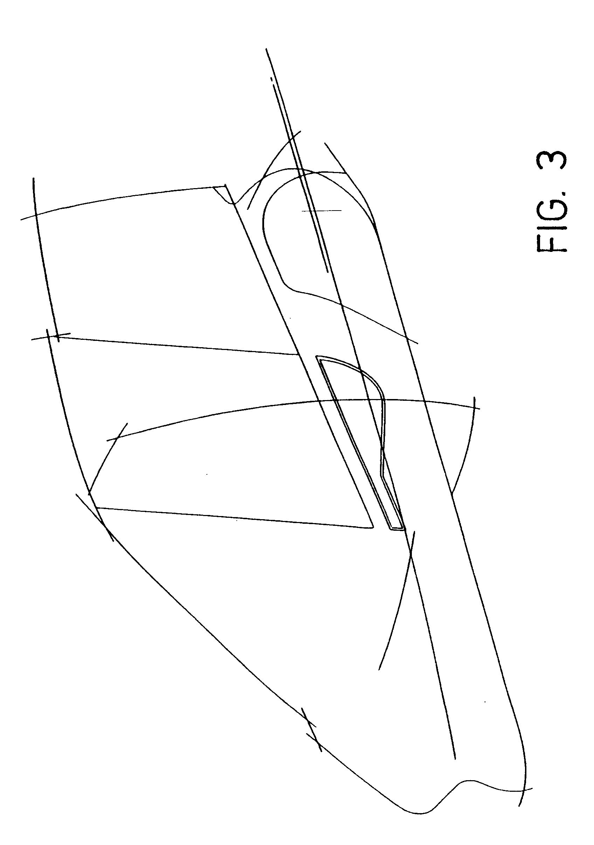

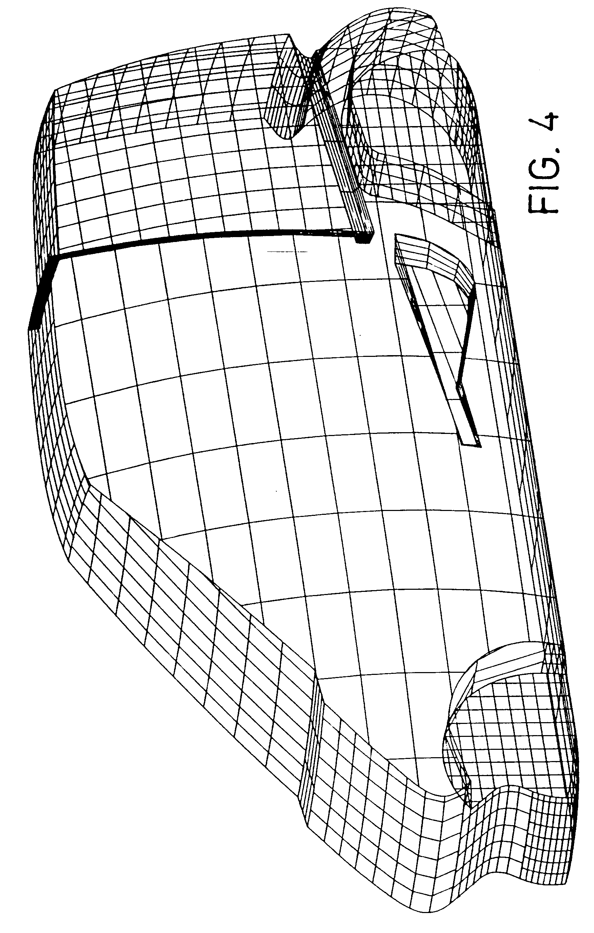

Die Fig. 3 und 4 veranschaulichen als Beispiel für einen ästhetischen Entwurfskörper eine Fahrzeug-Karosserie. Dabei zeigen Fig. 3 die Liniendarstellung für die Hauptansichten und Schnitte und Fig. 4 beinhaltet die Flächennetzdarstellung ausgehend von Kurven.

Die Realisierung des erfindungsgemäßen Verfahrens erfolgt nach der Arbeitsvariante B, d.h. es erfolgt nur eine Linienbeschreibung des Entwurfskörpers nach dem Prinzip, daß Linien Flächen repräsentieren.
Die erzeugten Linien oder Kurven werden von vornherein als Werkzeugwege betrachtet und genutzt.

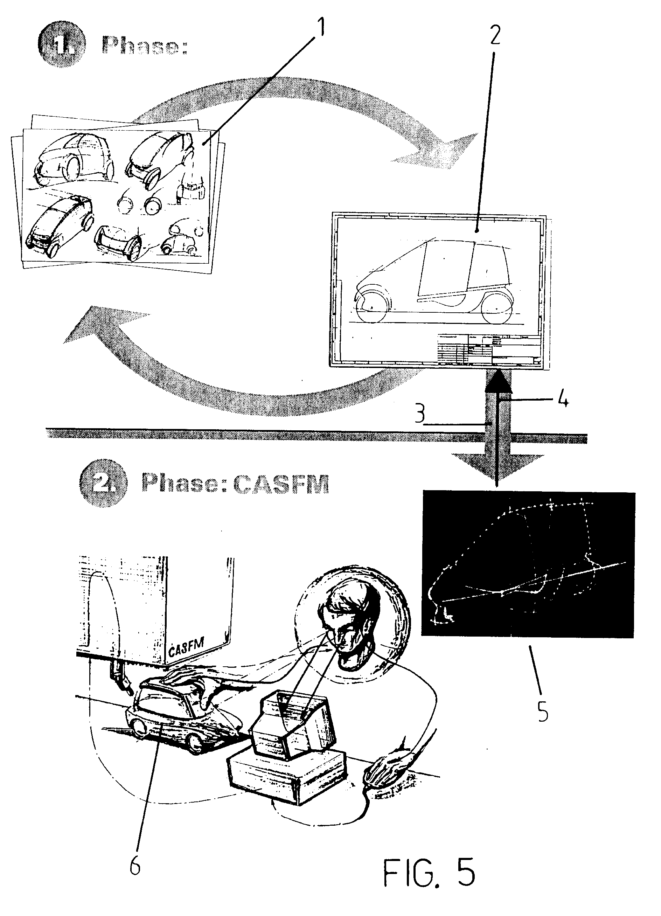

Fig. 5 zeigt die schematische Darstellung des Arbeitsablaufs auf der Grundlage des erfindungsgemäßen Verfahrens.
Die 1. Phase als graphische Entwurfsphase beinhaltet dabei den iterativen Entwurfsprozeß zwischen Skizzen 1 und technischen Zeichnungen 2.

Die Kopplung zwischen Phase 1 und Phase 2 erfolgt durch Übertragung 3 der Geometrieelemente in den Rechner 5.

Die Phase 2 umfaßt die computergestützte Solid Freeform Modellierung CASFM und verkörpert den Umgang mit Geometrieelementen im Rechner 5 selbst mit der Zielstellung Erstellung physischer Körper 6.

Beim Aufbau des Gesamtkörpers sind Rückkopplungen 4 zur Phase 1 möglich.

## Patentansprüche

1. Verfahren zur rechnerunterstützten Herstellung von in ihrer Außen- und/oder Innenkontur aus Freiformflächen und/oder regelgeometrisch geformten Flächen bestehenden technischen Körpern ohne Verwendung eines physischen Modells als Digitalisierungsvorlage,
**dadurch gekennzeichnet**, daß auf der Basis von graphischen Entwürfen, Skizzen, insbesondere auch Arbeitszeichnungen u.ä. darin enthaltene Kurven, Geraden, Punkte bzw. Referenzpunkte, also Geometrieelemente, in den Rechner überführt werden und somit ein rechnerinternes Geometriemodell erstellt wird, bei dem Flächen durch Punkte, Linien, Kurven (Geometrieelemente) repräsentiert werden und auf der Grundlage dieser Geometrieelemente Flächen erzeugt werden können,
und daß die Linien und/oder Flächen für die Steuerung der zur Erstellung des physischen Modells erforderlichen Werkzeuge genutzt werden.

2. Verfahren nach Anspruch 1,
**dadurch gekennzeichnet**, daß der Vorgang der Flächenerzeugung auf der Grundlage von Linien/Kurven lediglich im Rechner erfolgt, wobei aus den Linien im Rechner rechnerinterne Flächen generiert werden.

3. Verfahren nach Anspruch 1 oder 2,
**dadurch gekennzeichnet**, daß die zur Realisierung des Verfahrensablaufes erforderlichen Schritte und zugehörigen technischen Hilfsmittel an einem Arbeitsplatz zusammengefaßt sind.

4. Verfahren nach Anspruch 1 oder 2,
**dadurch gekennzeichnet**, daß die Überführung der Geometrielemente aus den Zeichnungen den folgenden Ablauf aufweist:
a) Gewinnen von Rohkordinatenwerten mittels Meßmittel oder Digitalisiertablett aus den Zeichnungsvorlagen, wofür mindestens zwei, jedoch wenige Schnitte/Ansichten und willkürlich definierte Punkte notwendig sind, nach denen die Kontur des Körpers nach innen und/oder außen durch begrenzende Kurvenzüge ausreichend beschrieben ist;
b) bei Einsatz von Meßmitteln Eingabe der Rohkoordinatenwerte in den Rechner zwecks Erzeugung von CAD-Daten als rechnerinternes Geometriemodell;
c) Auswählen von mindestens zwei, jedoch wenigen geeigneten Stützstellen aus den eingegebenen Rohkoordinaten und Erzeugung von Kurven;
d) Linien-/Kurvendiagnose.

5. Verfahren nach einem der Ansprüche 1 bis 3,
**dadurch gekennzeichnet**, daß bei der Arbeitsvariante A aus den im Rechner vorhandenen Linien Flächen erzeugt werden und aus den Einzelflächen bzw. Flächengruppen schrittweise der Aufbau des Gesamtkörpers erfolgt, wobei falls es dabei zu Flächendurchdringungen kommt, die überstehenden Flächenteile weggetrimmt werden können
und vorhandene rechnerinterne Einzelflächen und/oder Flächengruppen und/oder das gesamte Flächenmodell des Körpers zur Werkzeugsteuerung verwendet werden.

6. Verfahren nach einem der Ansprüche 1 bis 3,
**dadurch gekennzeichnet**, daß bei der Arbeitsvariante B die physischen Modelle und/oder Einzelflächen sofort auf der Grundlage der im Rechner vorhandenen Linien hergestellt werden, wobei die rechnerinternen Linien der Werkzeugsteuerung dienen.

7. Verfahren nach Anspruch 6,
**dadurch gekennzeichnet**, daß nach Abschluß der Entwurfsarbeit und der Herstellung des physischen Entwurfskörpers aus den ästhetisch und geometrisch bestätigten Linien im Rechner ein Flächenmodell generiert wird.

8. Verfahren nach einem der Ansprüche 1 bis 3,
**dadurch gekennzeichnet**, daß bei der Arbeitsvariante C die Beschreibung des Entwurfskörpers mittels Linien erfolgt, wobei diese Linien zur Steuerung der Werkzeuge dienen, mit denen ein physisches Modell und/oder eine Einzelfläche hergestellt wird und parallel dazu mit den am physischen Modell und/oder an der Einzelfläche bestätigten ästhetisch und geometrisch korrekten Kurven schrittweise der Flächenaufbau am Rechnermodell erfolgt.

9. Verfahren nach einem der Ansprüche 1 bis 3,
**dadurch gekennzeichnet**, daß bei der Arbeitsvariante D aus den im Rechner erzeugten Linien rechnerintern für die Bereiche des Entwurfskörpers Flächen generiert werden, wo zur Beschreibung der betreffenden Flächen ästhetisch korrekte Linien vorliegen oder keine wesentlichen ästhetischen Fehler erwartet werden
und an den "unsicheren Zonen" des Entwurfskörpers anfangs die Linien zur Werkzeugsteuerung dienen und erst dann für diese Bereiche rechnerinterne Flächenbeschreibungen erfolgen, wenn die mittels Liniensteuerung der Werkzeuge hergestellten und begutachteten physischen Modelle und/oder Teilmodelle und/oder Einzelflächen durch Linienänderung überarbeitet/korregiert wurden.

10. Verfahren nach Anspruch 9 sowie 7 oder 8,
**dadurch gekennzeichnet**, daß der rechnerinterne Ablauf für den Übergang von den "unsicheren Zonen" zu den "gesicherten Zonen" nach den Verfahrensvarianten B und C erfolgt.

11. Verfahren nach einem der Ansprüche 1 bis 10,
**dadurch gekennzeichnet**, daß die Arbeitsschritte der rechnerinternen Linien- und/oder Flächenerzeugung als Schleifenprozeß ablaufen, wobei von einem Arbeitsschritt in jeden beliebigen davorliegenden zurückgesprungen werden kann.
